# EUROPÄISCHE PATENTSCHRIFT

(11) **EP 2 242 165 B1**
(45) Veröffentlichungstag und Bekanntmachung des Hinweises auf die Patenterteilung: **11.07.2012**
(21) Anmeldenummer: 10159649.2
(22) Anmeldetag: 12.04.2010
(51) Int. Cl.: H02K 1/27, H02K 1/22, H02K 1/30

(54) **Läufer für eine elektrische Maschine**
Rotor for an electric machine
Rotor pour une machine électrique

(30) Priorität: 17.04.2009 DE 102009017850
(43) Veröffentlichungstag der Anmeldung: 20.10.2010
(73) Patentinhaber: SIEMENS AKTIENGESELLSCHAFT, 80333 München (DE)
(72) Erfinder: Balzer, Christoph, 10437, Berlin (DE); Brach, Karsten, 13589, Berlin (DE); Meyer, Christian, 13591, Berlin (DE); Schlawitz, Andre, 13189, Berlin (DE); Schüring, Ingo, 14621, Schönwalde (DE)

(56) Entgegenhaltungen:
- EP-A1- 0 509 119
- WO-A1-2005/117235
- WO-A2-2006/003244
- CH-A- 280 637
- DE-A1-102006 011 729
- DE-A1-102006 047 186
- DE-C- 578 782
- FR-A- 517 790
- JP-A- 61 189 147
- JP-A- 61 262 040
- US-A- 2 157 046
- US-A1- 2004 046 472
- US-A1- 2007 096 584

## Beschreibung

Die Erfindung betrifft einen Läufer für eine elektrische Maschine.

Läuferpolmagnetsysteme werden bisher in mehreren Magnetteilsystemen pro Pol auf ein Polrad montiert. Ein Magnetteilsystem besteht dabei aus einem Grundkörper, auf dem mehrere Permanentmagnete durch Klebung fixiert sind. Der Grundkörper wird mit dem Polrad verschraubt. Der Grundkörper kann je nach elektrischen Gegebenheiten massiv oder zur Vermeidung elektrischer Verluste geblecht ausgeführt werden. Da Permanentmagnete aus einem relativ spröden Material bestehen, ist eine Schutzfunktion gegen radiales und tangentiales Wegschleudern in Form von einer Polkappe oder Bandage erforderlich. Bei den aus dem Stand der Technik bekannten Läufern ist dabei, wie schon oben beschrieben, zur Realisierung des Läufers ein Polrad notwendig, an dem über den Grundkörper die Permanentmagnete des Läufers fixiert werden. Ein solches Polrad weist aber den Nachteil auf, dass es zum einen sehr schwer und zum anderen fertigungsaufwendig ist.

Die CH 280637 offenbart ein Polrad mit einem Wellenhohlkörper.

Es ist Aufgabe der Erfindung das Gewicht eines Läufers einer elektrischen Maschine zu reduzieren.

Diese Aufgabe wird gelöst durch einen Läufer für eine elektrische Maschine, wobei der Läufer ein erstes Wellenteil und ein vom ersten Wellenteil getrennt angeordnetes zweites Wellenteil aufweist, die im Bezug auf eine gemeinsame Rotationsachse hintereinander angeordnet sind, wobei ein erstes Trageelement drehfest mit dem ersten Wellenteil verbunden ist und ein zweites Trageelement drehfest mit dem zweiten Wellenteil verbunden ist, wobei der Läufer ein aus mehreren hintereinander angeordneten Blechen bestehendes Joch aufweist, wobei das Joch in Richtung der Rotationsachse im Inneren des Jochs verlaufende Aussparungen aufweist, wobei das Joch in Richtung der Rotationsachse verlaufende Löcher aufweist, wobei in den Aussparungen Permanentmagnete angeordnet sind, wobei das erste Trageelement über das Joch mit dem zweiten Trageelement verbunden ist, wobei zur Verspannung der Bleche in den Löchern durch das Joch hindurchgehende Spannbolzen angeordnet sind.

Durch die erfindungsgemäße Ausführung des Jochs des Läufers als selbsttragendes Element kann auf das sonst übliche Polrad komplett verzichtet werden, was eine erhebliche Gewichtseinsparung des Läufers ermöglicht und den Fertigungsprozess des Läufers stark vereinfacht.

Vorteilhafte Ausbildungen der Erfindung ergeben sich aus den abhängigen Ansprüchen.

Es erweist sich als vorteilhaft, wenn der erste Wellenteil und der zweite Wellenteil und das erste Trageelement und das zweite Trageelement und das Joch miteinander über Rippen verbunden sind, da durch die Rippen eine zusätzliche Versteifung der Konstruktion bewirkt wird.

Ferner erweist es sich als vorteilhaft, wenn die Aussparungen an den tangentialen Außenseiten größer sind als die Breite der Permanentmagnete, da der dadurch verbleibende Raum als Kühlkanal zur Wärmeabfuhr verwendet werden kann.

Ferner erweist es sich als vorteilhaft, wenn die Permanentmagnete mittels eines Klebers oder durch Harzverguss in den Aussparungen fixiert sind, da die Permanentmagnete hierdurch kostengünstig und einfach fixiert werden können.

Ferner erweist es sich als vorteilhaft, wenn zumindest ein Teil der Löcher zwischen den Aussparungen angeordnet sind. Die Spannbolzen, welche in den Löchern angeordnet sind, können dann einen sogenannten Dämpferkäfig bilden. In einen Kurzschlussfall wird dadurch die Gefahr der Entmagnetisierung der Permanentmagnete verringert. Aufgrund der hierdurch entstehenden geringen Breite der Stege, die sich im Bereich dieser Löcher ergeben, entsteht zudem eine magnetische Flusssperre um Streuflüsse zu minimieren.

Ferner erweist es sich als vorteilhaft, dass falls nicht alle Löcher zwischen den Aussparungen angeordnet sind, die verbliebenen Löcher im Bezug auf die Löcher, die zwischen den Aussparungen angeordnet sind, in radialer Richtung versetzt angeordnet sind. Hierdurch wird ein gleichmäßiges Pressen und Verspannen der Bleche, insbesondere auch in den Randbereichen des Jochs gewährleistet. Die dadurch erhöhte Anzahl an Spannbolzen führt wiederum dazu, dass diese entsprechend kleiner dimensioniert werden können.

Ferner erweist es sich als vorteilhaft, wenn in den Aussparungen jeweils mindestens zwei Permanentmagnete angeordnet sind, die über eine amagnetische Trennwand voneinander getrennt angeordnet sind, wobei die Trennwand eine derartige Form aufweist, dass die Trennwand ein Teil der Fliehkräfte der Permanentmagnete, die bei der Rotation des Läufers entstehen aufnimmt und in den der Rotationsachse zugewandten Teil des Jochs ableitet. Hierdurch wird der der Rotationsachse abgewandte Teil des Läufers entlastet, da dieser nicht vollständig die von den Permanentmagneten beim Rotieren erzeugten Fliehkräfte aufnehmen muss. Weiterhin wird ein zwischen den beiden Magneten auftretender magnetischer Fluss reduziert.

Ferner erweist es sich als vorteilhaft, wenn in den Aussparungen jeweils mindestens zwei Permanentmagnete angeordnet sind, die über einen Luftspalt voneinander getrennt angeordnet sind. Hierdurch wird zum Einen der magnetische Fluss zwischen den beiden Permanentmagneten reduziert und zum Anderen ein Luftspalt zur Wärmeabfuhr geschaffen.

Weiterhin erweist es sich als vorteilhaft, wenn das Joch und das zweite Trageelement derart angeordnet sind, dass die dem zweiten Trageelement zugewandte Stirnseite des Jochs an das zweite Trageelement anstößt. Durch diese konstruktive Maßnahme kann das zweite Element als Paketiervorrichtung zum Packen und Verspannen der Bleche dienen. Die normalerweise zur Paketierung der Bleche notwendige Paketiervorrichtung kann somit bei der Herstellung des Läufers entfallen, wodurch der Läufer kostengünstig und einfach hergestellt werden kann.

Ferner erweist sich der Einsatz des Läufers als besonders vorteilhaft, wenn die Maschine als ein Windkraftgenerator ausgebildet ist. Windkraftgeneratoren weisen häufig Läufer mit großen Durchmessern auf, so dass insbesondere bei Windkraftgeneratoren ein gewichtsmäßig leichter Läufer von großem Vorteil ist, da durch diese Maßnahme das Gewicht des in großer Höhe montierten Windkraftgenerator reduziert werden kann und die Tragekonstruktion für den Windkraftgenerator einfacher ausgeführt werden kann

Zwei Ausführungsbeispiele der Erfindung sind in der Zeichnung dargestellt und werden im Folgenden näher erläutert. Dabei zeigen:
- FIG 1: eine Maschine mit einem erfindungsgemäßen Läufer,
- FIG 2: ein Ausführungsbeispiel eines Jochs des erfindungs- gemäßen Läufers und
- FIG 3: ein zweites Ausführungsbeispiel eines Jochs des er- findungsgemäßen Läufers.

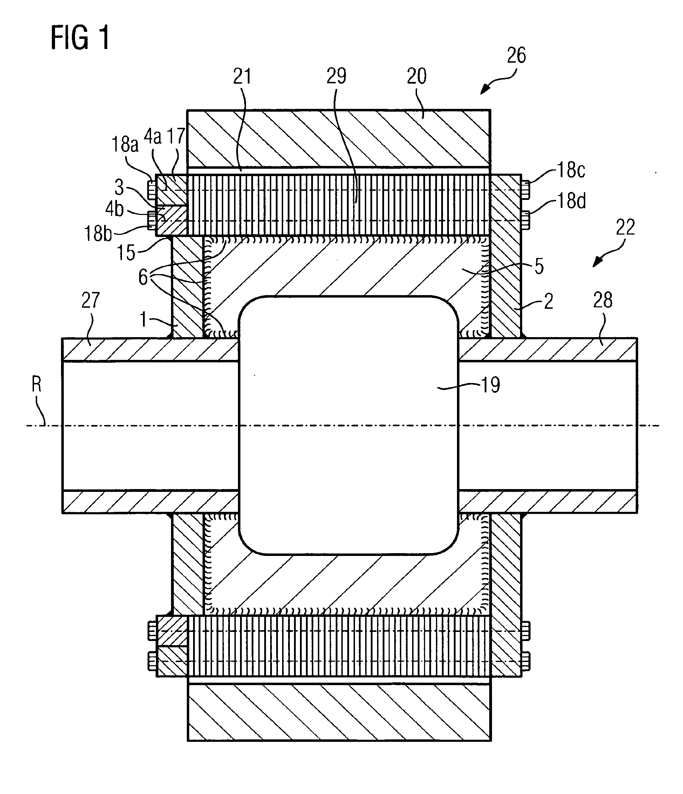

In FIG 1 ist in Form einer schematisierten Darstellung die zum Verständnis der Erfindung notwendigen wesentlichen Teile einer Maschine 26 dargestellt. Die Maschine 26 kann dann z.B. in Form eines Generators und insbesondere in Form eines Windkraftgenerators oder in Form eines elektrischen Motors vorliegen.

Die Maschine 26 weist einen ruhend angeordneten Stator 20 auf, der im Falle einer Ausbildung der Maschine 26 als Motor über ein von ihm erzeugtes Magnetfeld einen erfindungsgemäßen Läufer 22 rotierend antreibt, wobei der Läufer 22 um eine Rotationsachse R rotiert. Zwischen Stator 20 und dem Läufer 22 ist ein Luftspalt 21 angeordnet.

Der erfindungsgemäße Läufer 22 weist im Gegensatz zu handelsüblichen Läufern keine einstückig aufgebaute Welle auf, sondern die Welle ist zweiteilig ausgeführt. Der Läufer 22 weist solchermaßen ein erstes Wellenteil 27 und ein vom ersten Wellenteil 27 über einen Luftspalt 19 getrennt angeordnetes zweites Wellenteil 28 auf. Das erste Wellenteil 27 und das zweite Wellenteil 28 sind im Bezug auf die Rotationsachse R hintereinander angeordnet.

Weiterhin weist der Läufer 22 zur Befestigung eines Jochs 29 ein erstes Trageelement 1 und ein zweites Trageelement 2 auf. Das erste Trageelement 1 ist mit dem ersten Wellenteil 27 drehfest (z.B. über eine Schweißverbindung) verbunden und das zweite Trageelement 2 ist mit dem zweiten Wellenteil 28 drehfest (z.B. über eine Schweißverbindung) verbunden. Das erste und das zweite Trageelement sind dabei im Rahmen des Ausführungsbeispiels als Ringe ausgebildet.

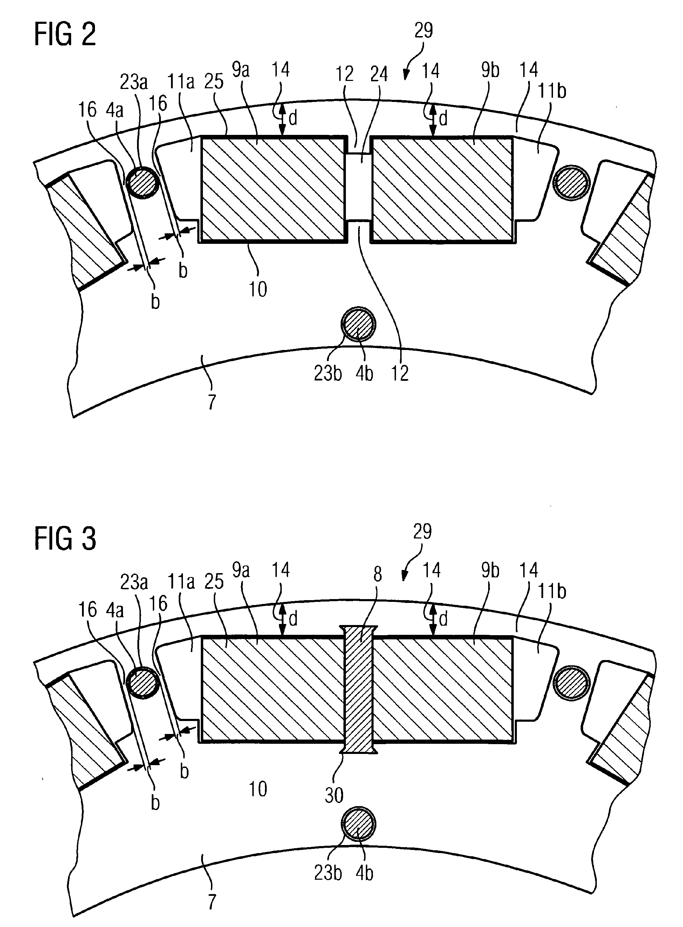

In FIG 2 ist das Joch 29 im Rahmen einer ersten Ausführungsform der Erfindung im Detail dargestellt. Das Joch 29 besteht aus einer Reihe im Bezug auf die Rotationsachse R hintereinander angeordneter Bleche, wobei in FIG 2 nur ein Blech 7 dargestellt ist. Die Bleche sind dabei vorzugsweise über den Umfang segmentiert ausgeführt und bestehen solchermaßen vorzugweise jeweilig aus mehreren Segmenten, die zu einem Ring angeordnet sind. Bei kleinen Durchmessern des Läufers können die segmentierten Bleche entfallen und durch einen Rundschnitt, d.h. ein einzelnes Blech pro Lage des Jochs, ersetzt werden. Die einzelnen Bleche sind dabei gleichmäßig angeordnet und in Richtung der Rotationsachse R gepackt und verspannt. Die Bleche der einzelnen Lagen sind über eine elektrische Isolierschicht voneinander elektrisch isoliert angeordnet.

Die Bleche weisen Aussparungen auf, wobei der Übersichtlichkeit halber nur eine Aussparung 25 mit einem Bezugszeichen versehen ist. Weiterhin weisen die Bleche Löcher auf, wobei der Übersichtlichkeit halber nur ein Loch 23a und ein Loch 23b mit einem Bezugszeichen versehen ist. Solchermaßen weist das Joch 29 in Richtung der Rotationsachse R im Inneren des Jochs 29 verlaufende Aussparungen auf und in Richtung der Rotationsachse R, im Rahmen des Ausführungsbeispiels im Inneren des Jochs 29, verlaufende Löcher auf. In den Aussparungen sind dabei Permanentmagnete angeordnet, wobei im Rahmen des Ausführungsbeispiels in jeder Aussparung zwei Permanentmagnete 9a und 9b angeordnet sind. Selbstverständlich kann aber auch nur ein einzelner Permanentmagnet pro Aussparung vorhanden sein oder auch mehr als zwei Permanentmagnete pro Aussparung vorhanden sein. Die Aussparungen sind maßlich derart toleriert, dass zwischen den Permanentmagneten und der Aussparung sich ein minimales Fügungsspiel 10 ergibt. Um Bewegungen der Permanentmagnete innerhalb der Aussparungen im Betriebszustand zu verhindern, werden diese vorzugsweise mit einem Kleber oder Harzverguss in den Aussparungen dauerhaft fixiert. Die Aussparungen sind dabei in ihren tangentialen Außenseiten größer ausgeführt als die Breite der Permanentmagnete. Die solchermaßen entstehenden verbleibenden Freiräume 11a und 11b dienen zur Realisierung einer Wärmeabfuhr als Kühlkanal. Die Breite b der Stege 16 zwischen zwei benachbarten Aussparungen und den zwischen den beiden benachbarten Aussparungen angeordnetem Loch werden so gering wie technisch möglich ausgebildet.

Die Permanentmagnete werden bei der Montage des Jochs 29 in die Aussparungen eingeführt. Zwischen den Permanentmagneten sind zur Reduzierung des magnetischen Flusses ein Luftspalt 24 und zwei Nasen 12 angeordnet, welche die beiden Permanentmagnete voneinander trennen. Der Luftspalt 24 kann vorzugsweise als weiterer Kühlkanal zur Realisierung einer verbesserten Wärmeabfuhr verwendet werden.

Zur Verspannung der Bleche sind in den Löchern Spannbolzen angeordnet, wobei der Übersichtlichkeit halber in der FIG 2 nur die Spannbolzen 4a und 4b mit Bezugszeichen versehen sind. Die Spannbolzen gehen dabei durch das Joch 29 hindurch. Mittels der Spannbolzen werden die Bleche über an beiden Enden des Jochs 29 angeordnete Schraubverbindungen miteinander verspannt und solchermaßen ein Blechpaket gebildet. Zur Verspannung der Bleche weist dabei der Läufer 22 unter anderem die Muttern 18a, 18b, 18c und 18d auf (siehe FIG 1). Die Spannbolzen sind dabei vorzugsweise gleichmäßig über den Umfang des Jochs 29 verteilt.

Im Rahmen einer vorteilhaften Ausbildung der Erfindung sind, wie schon beschrieben und in FIG 2 dargestellt, nicht alle Löcher zwischen den Aussparungen angeordnet, sondern einige Löcher sind im Bezug auf die Löcher, die zwischen den Aussparungen angeordnet sind, in radialer Richtung versetzt angeordnet. Ein solches Loch ist in FIG 2 mit dem Bezugszeichen 23b versehen. Durch die in radialer Richtung versetzte Anordnung der Löcher wird ein gleichmäßiges Verspannen der Bleche ermöglicht.

In FIG 3 ist eine zweite Ausführungsform der Erfindung dargestellt. Die in FIG 3 dargestellte Ausführungsform entspricht im Grundaufbau im Wesentlichen der vorstehend in FIG 2 beschriebenen Ausführungsform. Gleiche Elemente sind daher in FIG 3 mit den gleichen Bezugszeichen versehen wie in FIG 2. Der einzige wesentliche Unterschied besteht darin, dass bei der Ausführungsform gemäß FIG 3 die beiden Permanentmagnete 9a und 9b über eine amagnetische Trennwand 8 anstatt eines Luftspalts 24 voneinander getrennt angeordnet sind, wobei die Trennwand 8 eine derartige Form aufweist, dass die Trennwand 8 ein Teil der Fliehkräfte der Permanentmagnete, die bei der Rotation des Läufer entstehen aufnimmt und in den der Rotationsachse R zugewandten Teil des Jochs 29 ableitet. Im Rahmen dieses Ausführungsbeispiels weist die Trennwand 8 zur Aufnahme der Fliehkräfte Nasen auf, wobei der Übersichtlichkeit halber nur eine Nase 30 mit einem Bezugszeichen versehen ist. Hierdurch wird der der Rotationsachse R abgewande Teil des Jochs mechanisch entlastet, da dieser nicht vollständig die von den Permanentmagneten beim Rotieren erzeugten Fliehkräfte aufnehmen muss. Weiterhin wird ein zwischen den beiden Permanentmagneten 9a und 9b auftretender magnetischer Fluss durch die Trennwand 8 reduziert.

Wie in FIG 1 dargestellt, weist der Läufer 22 zum Abdecken und Verspannen der Bleche und damit des Jochs 29 ringförmige Deckel 3 und 17 auf, über die auch die Permanentmagnete abgedeckt werden. Zur Verbindung des Jochs 29 mit dem ersten Trageelement 1 wird der Deckel 3 im Rahmen des Ausführungsbeispiels über eine Schweißverbindung 15 mit dem ersten Trageelement 1 verschweißt. Das Joch 29 wird über die beispielhaft dargestellten Spannbolzen 4a und 4b, die in FIG 1 gestrichelt gezeichnet angedeutet sind und durch das Joch 29 verlaufen, über die Muttern 18c und 18d mit dem zweiten Trageelement 2 verschraubt und somit verbunden. Die Deckel 17 und 3 sind über Muttern 18a und 18b und über die Spannbolzen 4a und 4b mit dem Joch 29 verschraubt und somit verbunden.

Solchermaßen ist im Rahmen des Ausführungsbeispiels das erste Trageelement 1 über das Joch 29 mit dem zweiten Trageelement 2 verbunden.

Im Rahmen des Ausführungsbeispiels sind dabei in vorteilhafter Weise das Joch 29 und das zweite Trageelement 2 derart angeordnet, dass die dem zweiten Trageelement 2 zugewandte Stirnseite des Jochs 29 an das zweite Trageelement 2 anstößt. Das zweite Trageelement 2 bildet zusammen mit den Deckeln 17 und 3 sowie den Spannbolzen somit eine Paketiervorrichtung zum Packen und Spannen der Bleche des Jochs, so dass bei der Herstellung des Jochs 29 und damit des Läufers 22, auf die bei der Herstellung von handelsüblichen Läufern sonst notwendige separate externe Paketiervorrichtung verzichtet werden kann.

Erfindungsgemäß ist somit das Joch 29 als selbsttragendes Element ausgeführt und es kann auf ein Polrad komplett verzichtet werden. Die erfindungsgemäße Lösung hat, wie schon gesagt den Vorteil, dass auf eine Polkappe vollständig verzichtet werden kann, wobei erfindungsgemäß das Joch 29 zusammen mit den durch das Joch 29 hindurchgehenden Spannbolzen ein konstruktiv tragendes Element des Läufers 22 ist.

Die Aussparungen sind dabei so ausgelegt, dass die sich zum Luftspalt 21 ergebende Dicke d der Stege 14 (siehe FIG 2 und FIG 3) die Fliehkräfte der Permanentmagnete im Rahmen der Ausführungsform gemäß FIG 2 vollständig aufnehmen und im Rahmen der Ausführungsform gemäß FIG 3 zum größten Teil aufnehmen. Dies ermöglicht einen vereinfachten Klebeprozess, da die Permanentmagnete nur gegen "Klappern" innerhalb der Aussparungen gesichert werden müssen. Zudem wird der aufwändige Montageprozess der sonst bei handelsüblichen Läufern üblichen Magnetteilsysteme eingespart, da bei der erfindungsgemäßen Ausbildung des Läufers die Permanentmagnete nur in das Joch eingeschoben werden müssen und somit die Fliehkräfte von den Blechen des Jochs aufgenommen werden und nicht von einem Kleber gehalten werden müssen.

Weiterhin ist erfindungsgemäß die Welle nicht mehr einstückig aufgebaut sondern zweistückig, wobei der erste und der zweite Wellenteil über einen breiten Luftspalt 19 voneinander getrennt sind, so dass auch das Gewicht der Welle und damit des Läufers durch die Konstruktion zusätzlich zu der nicht mehr notwendigen Polkappe weiter reduziert wird. Gegebenenfalls kann im Rahmen einer vorteilhaften Ausführungsform der erste Wellenteil und der zweite Wellenteil und das erste Trageelement und das zweite Trageelement und das Joch über, z.B. in Form von Blechen ausgeführten Rippen 5 über Schweißverbindungen 6 miteinander verbunden werden. Hierdurch wird die Konstruktion weiter versteift.

Die zum Luftspalt 21 hin oberflächennah angeordneten Spannbolzen 23a können einen sogenannten Dämpferkäfig bilden. In einem Kurzschlussfall wird dadurch die Gefahr der Entmagnetisierung der Permanentmagnete verringert. Aufgrund der geringen Stegbreite b im Bereich des Spannbolzens 4a ergibt sich zudem eine magnetische Flusssperre um Streuflüsse zu minimieren.

## Patentansprüche

1. Läufer für eine elektrische Maschine (26), wobei der Läufer (22) ein erstes Wellenteil (27) und ein vom ersten Wellenteil (27) getrennt angeordnetes zweites Wellenteil (28) aufweist, die im Bezug auf eine gemeinsame Rotationsachse (R) hintereinander angeordnet sind, wobei ein erstes Trageelement (1) drehfest mit dem ersten Wellenteil (27) verbunden ist und ein zweites Trageelement (2) drehfest mit dem zweiten Wellenteil (28) verbunden ist, wobei der Läufer (22) ein aus mehreren hintereinander angeordneten Blechen (7) bestehendes Joch (29) aufweist, wobei das Joch (29) in Richtung der Rotationsachse (R) im Inneren des Jochs (29) verlaufende Aussparungen (25) aufweist, wobei das Joch (29) in Richtung der Rotationsachse (R) verlaufende Löcher (23a,23b) aufweist, wobei in den Aussparungen (25) Permanentmagnete (9a,9b) angeordnet sind, wobei das erste Trageelement (1) über das Joch (29) mit dem zweiten Trageelement (2) verbunden ist, wobei zur Verspannung der Bleche (7) in den Löchern (23a,23b) durch das Joch (29) hindurchgehende Spannbolzen (4a,4b) angeordnet sind.

2. Läufer nach Anspruch 1, **dadurch gekennzeichnet, dass** der erste Wellenteil (27) und der zweite Wellenteil (28) und das erste Trageelement (1) und das zweite Trageelement (2) und das Joch (29) miteinander über Rippen (5) verbunden sind.

3. Läufer nach einem der vorhergehenden Ansprüche, **dadurch gekennzeichnet, dass** die Aussparungen (25) an den tangentialen Außenseiten größer sind als die Breite der Permanentmagnete (9a,9b).

4. Läufer nach einem der vorhergehenden Ansprüche, **dadurch gekennzeichnet, dass** die Permanentmagnete (9a,9b) mittels eines Klebers oder durch Harzverguss in den Aussparungen (25) fixiert sind.

5. Läufer nach einem der vorhergehenden Ansprüche, **dadurch gekennzeichnet, dass** zumindest ein Teil (23a) der Löcher (23a,23b) zwischen den Aussparungen (25) angeordnet sind.

6. Läufer nach einem der vorhergehenden Ansprüche, **dadurch gekennzeichnet, dass** falls nicht alle Löcher (23a,23b) zwischen den Aussparungen (25) angeordnet sind, die verbliebenen Löcher (23b) im Bezug auf die Löcher (23a), die zwischen den Aussparungen (25) angeordnet sind, in radialer Richtung versetzt angeordnet sind.

7. Läufer nach einem der vorhergehenden Ansprüche, **dadurch gekennzeichnet, dass** in den Aussparungen (25) jeweils mindestens zwei Permanentmagnete (9a,9b) angeordnet sind, die über eine amagnetische Trennwand (8) voneinander getrennt angeordnet sind, wobei die Trennwand (8) eine derartige Form aufweist, dass die Trennwand (8) ein Teil der Fliehkräfte der Permanentmagnete (9a,9b), die bei der Rotation des Läufers (22) entstehen aufnimmt und in den der Rotationsachse (R) zugewandten Teil des Jochs (29) ableitet.

8. Läufer nach einem der Ansprüche 1 bis 6, **dadurch gekennzeichnet, dass** in den Aussparungen (25) jeweils mindestens zwei Permanentmagnete (9a,9b) angeordnet sind, die über einen Luftspalt (24) voneinander getrennt angeordnet sind.

9. Läufer nach einem der vorhergehenden Ansprüche, **dadurch gekennzeichnet, dass** das Joch (29) und das zweite Trageelement (2) derart angeordnet sind, dass die dem zweiten Trageelement (2) zugewandte Stirnseite des Jochs (29) an das zweite Trageelement (2) anstößt.

10. Maschine, wobei die Maschine als Windkraftgenerator ausgebildet ist und einen Läufer (22) nach einem der Ansprüche 1 bis 9 aufweist.

## Claims

1. Rotor for an electrical machine (26), the rotor (22) having a first shaft part (27) and a second shaft part (28), which is arranged separately from the first shaft part (27), said first and second shaft parts being arranged one behind the other with respect to a common axis of rotation (R), a first supporting element (1) being connected in a manner fixed against rotation to the first shaft part (27), and a second supporting element (2) being connected in a manner fixed against rotation to the second shaft part (28), the rotor (22) having a yoke (29), which comprises a plurality of laminates (7) arranged one behind the other, the yoke (29) having cutouts (25) running in the direction of the axis of rotation (R) in the interior of the yoke (29), the yoke (29) having holes (23a, 23b) running in the direction of the axis of rotation (R), permanent magnets (9a, 9b) being arranged in the cutouts (25), the first supporting element (1) being connected to the second supporting element (2) via the yoke (29), tensioning pins (4a, 4b), which pass through the yoke (29), being arranged in the holes (23a, 23b) in order to brace the laminates (7).

2. Rotor according to Claim 1, **characterized in that** the first shaft part (27) and the second shaft part (28) and the first supporting element (1) and the second supporting element (2) and the yoke (29) are connected to one another via ribs (5).

3. Rotor according to one of the preceding claims, **characterized in that** the cutouts (25) on the tangential outer sides are larger than the width of the permanent magnets (9a, 9b).

4. Rotor according to one of the preceding claims, **characterized in that** the permanent magnets (9a, 9b) are fixed in the cutouts (25) by means of an adhesive or by means of cast resin.

5. Rotor according to one of the preceding claims, **characterized in that** at least some (23a) of the holes (23a, 23b) are arranged between the cutouts (25).

6. Rotor according to one of the preceding claims, **characterized in that**, if not all of the holes (23a, 23b) are arranged between the cutouts (25), the remaining holes (23b) are arranged offset in the radial direction with respect to the holes (23a) which are arranged between the cutouts (25).

7. Rotor according to one of the preceding claims, **characterized in that** in each case at least two permanent magnets (9a, 9b) are arranged in the cutouts (25) and are arranged in a manner in which they are separated from one another via an amagnetic separating wall (8), the separating wall (8), having such a shape that the separating wall (8) absorbs some of the centrifugal forces of the permanent magnets (9a, 9b) which are produced on rotation of the rotor (22) and diverts them into that part of the yoke (29) which faces the axis of rotation (R).

8. Rotor according to one of Claims 1 to 6, **characterized in that** in each case at least two permanent magnets (9a, 9b) are arranged in the cutouts (25) and are arranged in such a way as to be separated from one another via an air gap (24).

9. Rotor according to one of the preceding claims, **characterized in that** the yoke (29) and the second supporting element (2) are arranged in such a way that that end side of the yoke (29) which faces the second supporting element (2) abuts the second supporting element (2).

10. Machine, wherein the machine is in the form of a wind power generator and has a rotor (22) according to one of Claims 1 to 9.

## Revendications

1. Rotor pour une machine ( 26 ) électrique, dans lequel le rotor ( 12 ) a une première partie ( 27 ) d'arbre et une deuxième partie ( 28 ) d'arbre disposée de manière séparée de la première partie ( 27 ) d'arbre, qui sont disposées l'une derrière l'autre sur un axe ( 7 ) de rotation commun, un premier élément ( 1 ) de support étant solidaire en rotation de la première partie ( 27 ) d'arbre et un deuxième élément de support étant solidaire en rotation de la deuxième partie ( 28 ) d'arbre, dans lequel le rotor ( 22 ) comporte une culasse ( 29 ) constituée de plusieurs tôles ( 7 ) disposées les unes derrière les autres, la culasse ( 29 ) ayant des évidements ( 25 ) s'étendant à l'intérieur de la culasse ( 29 ) dans la direction de l'axe ( R ) de rotation, la culasse ( 29 ) ayant des trous ( 23a, 23b ) s'étendant dans la direction de l'axe ( R ) de rotation, dans lequel des aimants ( 9a, 9b ) permanents sont disposés dans les évidements ( 25 ), le premier élément ( 1 ) de support étant relié au deuxième élément ( 2 ) de support par la culasse ( 29 ), dans lequel des boulons ( 4a, 4b ) de blocage, traversant la culasse ( 29 ), sont prévus pour le blocage des tôles ( 7 ) dans les trous ( 23a, 23b ).

2. Rotor suivant la revendication 1, **caractérisé en ce que** la première partie ( 27 ) de l'arbre et la deuxième partie ( 28 ) de l'arbre et le premier élément ( 1 ) de support et le deuxième élément ( 2 ) de support et la culasse ( 29 ) sont reliés entre eux par des voiles ( 5 ).

3. Rotor suivant l'une des revendications précédentes, **caractérisé en ce que** les évidements ( 25 ) sont plus grands sur les côtés extérieurs tangentiels que la largeur des aimants ( 9a, 9b ) permanents.

4. Rotor suivant l'une des revendications précédentes, **caractérisé en ce que** les aimants ( 9a, 9b ) permanents sont immobilisés dans les évidements ( 25 ) au moyen d'une colle ou d'une coulée de résine.

5. Rotor suivant l'une des revendications précédentes, **caractérisé en ce qu'**au moins une partie ( 23a ) des trous ( 23a, 23b ) est disposée entre les évidements ( 25 ).

6. Rotor suivant l'une des revendications précédentes, **caractérisé en ce que**, si tous les trous ( 23a, 23b ) ne sont pas disposés entre les évidements ( 25 ), les trous ( 23b ) restants sont décalés dans la direction radiale par rapport aux trous ( 23 ) qui sont disposés entre les évidements ( 25 ) .

7. Rotor suivant l'une des revendications précédentes, **caractérisé en ce que** dans les évidements ( 25 ) sont disposés respectivement au moins deux aimants ( 9a, 9b ) permanents, qui sont disposés en étant séparés l'un de l'autre par une cloison ( 8 ) amagnétique, la cloison ( 8 ) ayant une forme telle que la cloison ( 8 ) absorbe une partie des forces centrifuges des aimants ( 9a, 9b ) permanents, qui se créent lors de la rotation du rotor ( 22 ), et les détournent dans la partie de la culasse ( 29 ) tournée vers l'axe ( R ) de rotation.

8. Rotor suivant l'une des revendications 1 à 6, **caractérisé en ce que** dans les évidements ( 25 ) sont disposés respectivement au moins deux aimants ( 9a, 9b ) permanents, qui sont disposés en étant séparés l'un de l'autre par un entrefer ( 24 ).

9. Rotor suivant l'une des revendications précédentes, **caractérisé en ce que** la culasse ( 29 ) et le deuxième élément ( 2 ) de support sont disposés de manière à ce que le côté frontal de la culasse ( 29 ), tourné vers le deuxième élément ( 2 ) de support, s'appuie sur le deuxième élément ( 2 ) de support.

10. Machine, dans laquelle la machine est constituée en génératrice d'éolienne et a un rotor ( 22 ) suivant l'une des revendications 1 à 9.
